# EUROPÄISCHE PATENTSCHRIFT

(11) **EP 2 110 320 B1**
(45) Veröffentlichungstag und Bekanntmachung des Hinweises auf die Patenterteilung: **14.03.2012**
(21) Anmeldenummer: 09158039.9
(22) Anmeldetag: 16.04.2009
(51) Int. Cl.: B65B 31/02, B65B 61/00

(54) **Verfahren und Vorrichtung zum Verpacken eines Schüttguts in Beuteln**
Method and device for packaging a bulk good in bags
Procédé et dispositif d'emballage de produits en vrac dans des sacs

(30) Priorität: 18.04.2008 DE 102008019625
(43) Veröffentlichungstag der Anmeldung: 21.10.2009
(73) Patentinhaber: MULTIVAC Sepp Haggenmüller GmbH & Co KG, 87787 Wolfertschwenden (DE)
(72) Erfinder: Grimm, Bernhard, 87435 Kempten (DE); Lachmann, Wolfgang, 87700 Memmingen (DE)
(74) Vertreter: Grünecker, Kinkeldey, Stockmair & Schwanhäusser

(56) Entgegenhaltungen:
- EP-A- 0 398 306
- FR-A- 1 115 890
- US-A1- 2006 037 884
- US-A1- 2008 000 204

## Beschreibung

Die vorliegende Erfindung bezieht sich auf ein Verfahren und eine Vorrichtung zum Verpacken eines Schüttguts, insbesondere pulver- oder granulatförmiger Produkte in Beuteln, insbesondere für eine Kammermaschine bzw. eine Kammerbandmaschine.

Für die Verpackung von Schüttgut, insbesondere pulver- bzw. granulatförmiger Produkte sind Vorrichtungen bzw. Verfahren bekannt, mit denen Beutel befüllt werden und anschließend aufrecht stehend versiegelt werden, um zu verhindern, dass das Schüttgut die Siegelnaht verunreinigt. Durch eine solche Verschmutzung der Siegelnaht kann eine sichere Siegelung nicht gewährleistet werden. Durch dieses Verfahren können Lufteinschlüsse im Beutel nicht verhindert werden, was dazu führt, dass einerseits das Verpackungsvolumen ansteigt und andererseits der optische Eindruck leidet.

Weiterhin sind Vorrichtungen bekannt, mit denen die mit Schüttgut befüllten Beutel im Liegen versiegelt werden. Bei herkömmlichen Kammermaschinen ist eine Evakuierung allerdings nicht möglich, da das Schüttgut durch den aus der Evakuierung resultierenden Luftstrom in Richtung der Beutelöffnung gesaugt wird und somit die Siegelnaht verunreinigt.

Die FR 1 115 890 beschreibt ein Verfahren zum Herstellen von Verpackungen, beispielsweise für Kaffee. Nach dem Befüllen einer offenen Verpackung wird diese zunächst in einer ersten Siegelstation versiegelt. Indem die Behälter an einer mit Spitzen versehenen Rolle und einer entsprechenden Gegenrolle entlang geführt werden, werden unterhalb der Siegelnaht Perforationen in den Behälter eingebracht. Anschließend werden die Behälter durch die Perforationen evakuiert, bevor unterhalb der Perforationen eine zweite Siegelnaht vorgesehen wird.

Die EP 0 398 306 A1 beschreibt eine Vakuum-Kammermaschine zum Verschließen von Beuteln, bei denen jedoch keine Perforationen vorgesehen sind.

Aus der US 2006/0037884 A1 ist ferner ein Beutel bekannt, bei dem vor dem Befüllen Mikroperforationen vorgesehen werden, beispielsweise mittels eines Lasers. Durch die Mikroperforationen wird der Behälter evakuiert. Anschließend werden die Perforationen durch ein Abdichtmittel verschlossen, beispielsweise durch ein Harz.

Die herkömmlichen Vorrichtungen und Verfahren zum Verpacken von Schüttgut in einem Beutel sind jedoch noch vergleichsweise komplex.

Die Aufgabe der vorliegenden Erfindung ist es daher, ein verbessertes Verfahren und eine Vorrichtung bereitzustellen, das/die es ermöglicht, Schüttgut in einer Kammermaschine unter Vakuum zu verpacken.

Die Aufgabe wird gelöst durch ein Verfahren gemäß Anspruch 1 und eine Vorrichtung gemäß Anspruch 14. Weiterbildungen der Erfindung sind in den Unteransprüchen angegeben.

Durch die Perforierung des Beutels mit Hilfe einer Perforiervorrichtung entweicht das Gas bzw. die Luft aus dem Beutel durch die erzeugten Öffnungen trotz des in der Kammer anliegenden Vakuums langsam genug, um zu verhindern, dass der Beutelinhalt, d.h. das Schüttgut, beispielsweise in Form von Pulver oder Granulat in Richtung der Beutelöffnung bzw. des Siegelbereichs gesaugt und/oder durch die Folie des kollabierenden Beutels gedrückt wird und den Siegelbereich verunreinigt. Ein Luftstrom aus dem Beutel heraus, der Produktteilchen zur Ansaugöffnung transportieren könnte, wird verhindert. Auf diese Weise kann Schüttgut ohne kostenintensive Modifikationen mittels der Kammermaschine verpackt werden.

Die Kombination der luftdichten Abdichtung des Beutels durch eine Klemmschiene und der Perforierung der Beutelfolie hat gegenüber einer Drosselung in der Vakuumleitung den Vorteil, dass der Luftstrom aus dem Beutel heraus wesentlich genauer einstellbar ist. Bei einer Drosselung in der Vakuumleitung kann durch die strömungstechnischen Eigenheiten der jeweiligen Kammermaschine nicht ausgeschlossen werden, dass der Luftstrom aus dem Beutel zu stark wird und dadurch Produktbestandteile in den Siegelbereich gelangen. Durch die vorliegende Erfindung kann der Luftstrom durch die Anzahl und Größe bzw. Fläche der Öffnungen, sowie durch den Vakuumwert genau bestimmt werden. Durch die Erzeugung vieler kleiner Öffnungen wird die Bildung eines Luftstroms, der Produktteilchen transportieren kann, minimiert bzw. verhindert.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Seitenansicht einer Kammerbandma- schine;
- Fig. 2a: eine schematische Schnittansicht eines Teils der Kammerbandmaschine bei angehobenem Deckel;
- Fig. 2b: eine schematische Schnittansicht eines Teils der Kammerbandmaschine bei abgesenkter Perforiervor- richtung und abgesenktem Deckel;
- Fig. 2c: eine schematische Schnittansicht eines Teils der Kammerbandmaschine beim Evakuieren der Kammer;
- Fig. 2d: eine schematische Schnittansicht eines Teils der Kammerbandmaschine beim Siegeln und Trennen;
- Fig. 2e: eine schematische Schnittansicht eines Teils der Kammerbandmaschine beim Belüften bzw. der Öffnung des Deckels;
- Fig. 3: eine schematische Schnittansicht einer Perforiervorrichtung;
- Fig. 4: eine schematische Schnittansicht einer Aufnahme in einer zweiten Ausführungs- form mit zwei Siegeldrähten und einem Trenndraht;
- Fig. 5: eine schematische Schnittansicht eines Teils der Kammerbandmaschine bei ge- öffnetem Deckel in einer weiteren Ausführungsform.

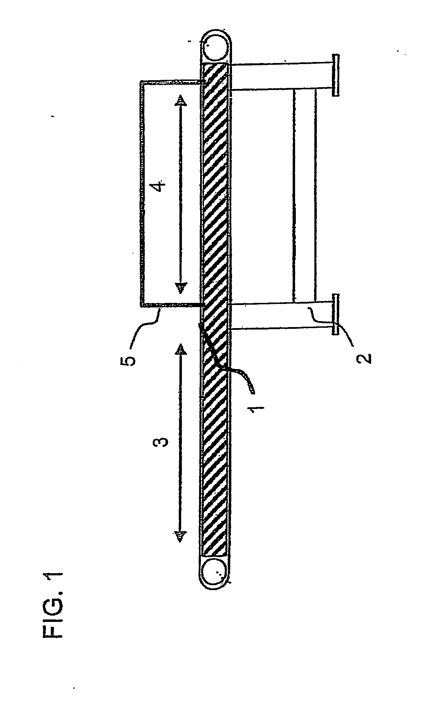

Im Folgenden wird mit Bezug auf Fig. 1 bis 3 eine erste Ausführungsform der Erfindung beispielhaft an einer Kammerbandmaschine beschrieben. In der vorliegenden Ausführungsform ist die Kammerbandmaschine als automatische Kammerbandmaschine ausgebildet.

Fig. 1 zeigt eine schematische Ansicht einer Kammerbandmaschine mit einem Förderband 1, einem Gestell 2, einem Auf-

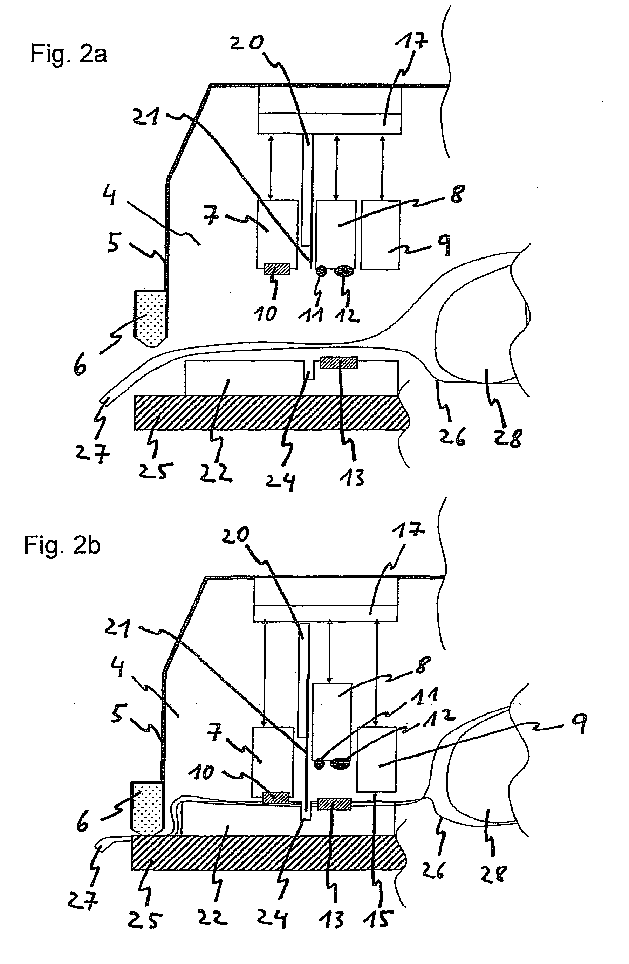

legebereich 3, einer Kammer 4 und einem Deckel 5. Die Kammer 4 wird durch den Deckel 5 zusammen mit einem Unterteil 25 (siehe Fig. 2a bis e) gebildet, wobei sich der Deckel 5 beispielsweise motorisch betrieben automatisch öffnet oder manuell öffnen lässt, um beispielsweise zu evakuierende bzw. zu versiegelnde Beutel 26 (siehe Fig. 2a bis e) aufzunehmen, die durch das Förderband 1 automatisch zugeführt werden, und der sich anschließend schließt, um die Kammer 4 zu bilden.

Fig. 2a zeigt eine schematische Schnittansicht eines Teils der Kammerbandmaschine. Der Deckel 5 ist an seinem unteren Rand mit einer umlaufenden Deckeldichtung 6 versehen, um zu gewährleisten, dass der Deckel 5 bzw. die Deckeldichtung 6 beim Schließen des Deckels 5 zusammen mit dem Unterteil 25 die luftdichte Kammer 4 bildet. Auf der Innenseite der Deckfläche des Deckels 5 ist ein Aufnahmeblock 17 vorgesehen. An dem Aufnahmeblock 17 sind absenkbar bzw. anhebbar (dargestellt durch die drei Doppelpfeile) eine Klemmschienenaufnahme 7, eine Aufnahme 8 und ein Begrenzungsbalken 9 vorgesehen. An der Unterseite der Klemmschienenaufnahme 7 ist eine Klemmschiene 10 und an der Aufnahme 8 ist ein Trenndraht 11 bzw. ein Siegeldraht 12 vorgesehen. Die Klemmschienenaufnahme 7, die Aufnahme 8, der Begrenzungsbalken 9, die Klemmschiene 10, der Trenndraht 11 und der Siegeldraht 12 erstrecken sich jeweils über die gesamte Beutelbreite in die Zeichenebene hinein bzw. aus ihr heraus. Zusätzlich ist am Aufnahmeblock 17 eine Perforiervorrichtungsaufnahme 20 mit einer absenkbaren Perforiervorrichtung 21 vorgesehen. In der Kammer 4 ist eine Widerlageraufnahme 22 vorgesehen, die wiederum auf dem Unterteil 25 vorgesehen ist. In die Widerlageraufnahme 22 ist ein Widerlager 13 eingelassen, das im Betrieb mit dem Trenndraht 11 und dem Siegeldraht 12 zusammenwirkt. Weiterhin ist in der Widerlageraufnahme 22 ein Schlitz 24 vorgesehen, der im Betrieb mit der Perforiervorrichtung 21 zusammenwirkt. Die Widerlageraufnahme 22, das Widerlager 13, sowie der Schlitz 24 erstrecken sich über die gesamte Beutelbreite in die Zeichenebene hinein bzw. aus ihr heraus.

In der Kammer 4 befindet sich ein Beutel 26, in dem sich ein Produkt 28 befindet und dessen Beutelhals 27 sich in Fig. 2a nach links aus der Kammer 4 hinaus erstreckt. Der Beutel 26 ist so angeordnet, dass sich der Beutelhals 27 im Wesentlichen zwischen der Klemmschiene 10, dem Trenndraht 11 bzw. dem Siegeldraht 12 und der Widerlageraufnahme 22 befindet.

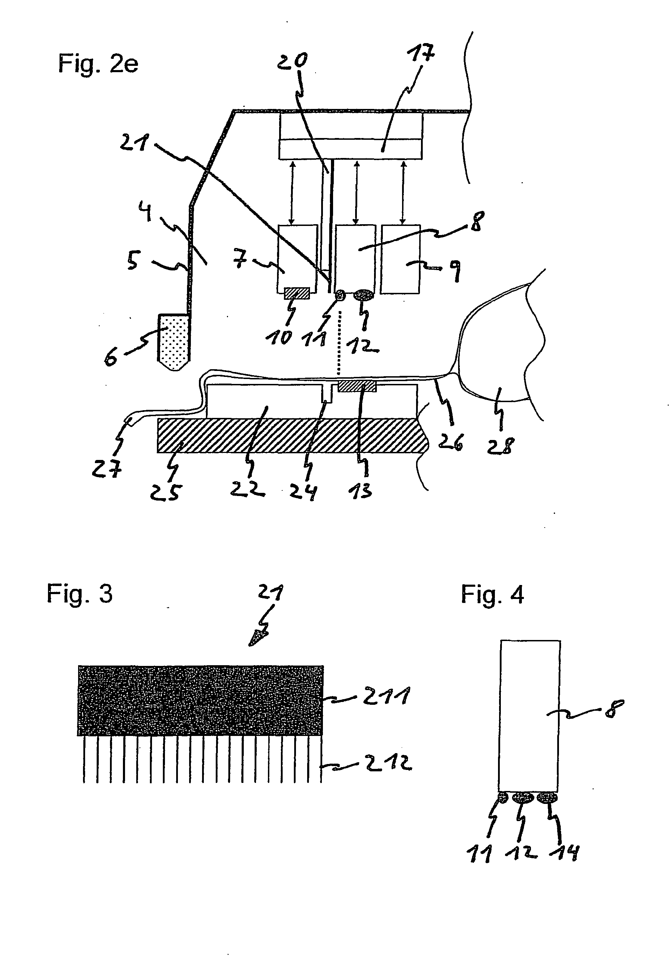

Fig. 3 zeigt die Perforiervorrichtung 21. An einer Nadelaufnahme 211 ist eine Mehrzahl bzw. eine Vielzahl von den Nadeln 212 vorgesehen. Auf diese Weise wird ermöglicht, dass der Beutel 26 mit einer Mehrzahl bzw. einer Vielzahl von Öffnungen versehen wird.

In Fig. 2a bis e ist der Betrieb der erfindungsgemäßen Vorrichtung bzw. das erfindungsgemäße Verfahren gezeigt.

Wie in Fig. 2a gezeigt ist, wird der mit Schüttgut befüllte und noch nicht versiegelte Beutel 26 in der Kammer 4 zwischen der Klemmschiene 10, dem Trenndraht 11 bzw. dem Siegeldraht 12 und der Widerlageraufnahme 22 platziert. Dabei ist darauf zu achten, dass der befüllte Beutel 26 möglichst vorsichtig eingelegt bzw. auf das Förderband 1 (siehe Fig. 1) aufgelegt wird, um eine Verunreinigung des Siegelbereichs durch selbstständig vorrutschendes Schüttgut zu vermeiden. Die Klemmschienenaufnahme 7, die Aufnahme 8 und der Begrenzungsbalken 9 befinden sich in diesem Schritt in ihrer Ruheposition bzw. in ihrer Ausgangslage. Der Deckel 5 befindet sich in einer angehobenen Position.

Anschließend wird, wie in Fig. 2b gezeigt ist, der Deckel 5 geschlossen. Der Deckel 5 bildet zusammen mit dem Unterteil 25 die Kammer 4. Vor und/oder bei und/oder nach dem Schließen des Deckels 5 wird die Perforiervorrichtung 21 abgesenkt und perforiert den Beutel 26. In der gezeigten Ausführungsform erzeugt eine Vielzahl von Nadeln 212 (siehe Fig. 3) eine Vielzahl von im Wesentlichen kreisrunden Öffnungen in der Beutelfolie. Die Öffnungen werden mit einem Abstand von etwa 1mm bis etwa 100mm zueinander und einer Fläche von etwa 0,002mm² bis etwa 0,2mm² erzeugt. Vorteilhafterweise werden die Öffnungen mit einem Abstand von etwa 1mm bis etwa 50mm zueinander und einer Fläche von etwa 0,002mm² bis etwa 0,1mm² erzeugt. Weiterhin vorteilhafterweise werden die Öffnungen mit einem Abstand von etwa 1mm bis etwa 20mm zueinander und einer Fläche von etwa 0,005mm² bis etwa 0,1mm² erzeugt. Die Nadeln 212 (siehe Fig. 3) der Perforationsvorrichtung 21 sind dementsprechend angeordnet und angepasst. Die erzeugten Löcher bilden im Beutel 26 eine Linie, die sich in die Zeichenebene hinein bzw. aus ihr heraus über die gesamte Breite des Beutels 26 erstreckt. Die erzeugte Perforierung im Beutel 26 kann auf vielfältige Weise erfolgen. Es sind z.B. auch mehrere Reihen von Nadeln 212 (siehe Fig. 3) denkbar. Denkbar ist es z.B. auch Schlitze oder andersartige Öffnungen in der Beutelfolie zu erzeugen. Die Perforierung des Beutels im Sinne der erfinderischen Idee bedeutet den Beutel 26 mit einer Vielzahl von regelmäßig angeordneten Löchern mit vorgegebener Form und Größe zu versehen. Die Form, Größe und Anzahl der erzeugten Öffnungen im Beutel 26 wird in Abhängigkeit der Vakuumpumpenleistung, der gewünschten Taktleistung bzw. der Prozesszeit und der Eigenschaften des Produkts 28, z.B. der Korngröße, gewählt.

Im selben Schritt wird auch der Begrenzungsbalken 9 abgesenkt. Zwischen dem Begrenzungsbalken 9 und der Widerlageraufnahme 22 verbleibt ein Spalt 15, um bei einer späteren Evakuierung der Kammer 4 ein Entweichen der Luft aus dem Beutel 26 zu ermöglichen. Durch die entweichende Luft aus dem Beutel 26 legt sich die Beutelfolie an das Produkt 28 an. Durch die üblicherweise flache Form des Beutels 26 wird das Produkt 28 zusammengedrückt und wird somit in Richtung des Beutelhalses 27 gedrückt. Der Spalt 15 ist derart ausgebildet, dass ein Abrutschen des Schüttguts in Richtung des Beutelhalses 27 bzw. in den Siegelbereich verhindert wird. Je nach Rieselfähigkeit bzw. dem Fließverhalten des zu verpackenden Produkts 28 kann die Breite des Spalts 15 variiert werden. Außerdem wird die Klemmschienenaufnahme 7 bzw. die Klemmschiene 10 abgesenkt, um den Beutel 26 zu klemmen und abzudichten. Auf diese Weise wird bei der späteren Evakuierung der Kammer 4 ein Gasvolumenstrom bzw. ein Luftstrom durch den Beutelhals 27 in die Kammer 4 verhindert. Weist der Beutel 26, wie in Fig. 2b dargestellt, einen langen Beutelhals 27 auf, wird dieser zusätzlich durch die Deckeldichtung 6 geklemmt.

Vorteilhafterweise wird die Klemmschiene 10 bereits vor dem Schließen der Kammer 4 abgesenkt. Andernfalls würde, da die Vakuumpumpe zur Evakuierung üblicherweise kontinuierlich läuft, beim Schließen der Kammer 4 Luft aus dem Beutel 26 durch den Beutelhals 27 abgesaugt, da noch keine Perforationen vorhanden sind. Dies hätte unter Umständen eine Verunreinigung des Siegelbereichs durch mit angesaugtes Schüttgut zur Folge. Wenn ein langer Beutelhals 27 bereits durch die Deckeldichtung 6 eingeklemmt ist, besteht dieses Problem nicht. Die Aufnahme 8 bzw. der Trenndraht 11 und der Siegeldraht 12 befinden sich in diesem Schritt noch in ihrer Ruheposition.

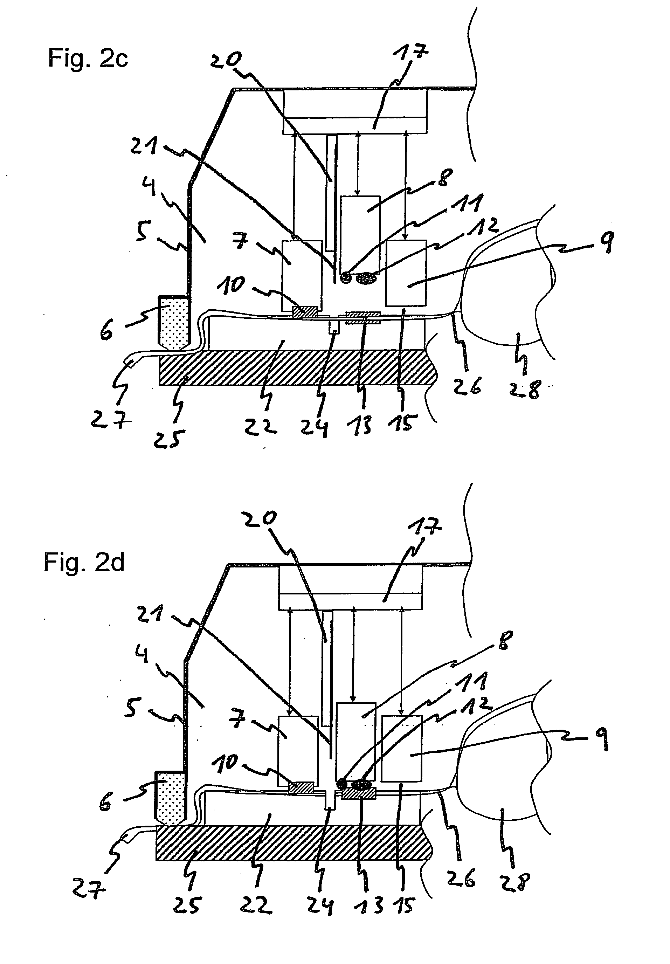

Wie in Fig. 2c gezeigt ist, wird die Perforiervorrichtung 21 wieder in ihre Ruheposition bewegt. Gleichzeitig bzw. danach wird die Kammer 4 mit Hilfe von mindestens einer Vakuumpumpe evakuiert. Es ist zum Beispiel auch denkbar, dass statt einer integrierten Vakuumpumpe in oder an der Maschine, eine zentrale Vakuumanlage vorgesehen ist.

Wie in Fig. 2d gezeigt ist, wird die Aufnahme 8 und mit ihr der Trenndraht 11 bzw. der Siegeldraht 12 abgesenkt. Der Beutel 26 wird auf diese Weise gleichzeitig versiegelt und geschnitten. Der Trenndraht 11 und der Siegeldraht 12 wirken hierbei mit dem Widerlager 13 zusammen. Der Trenndraht 11 ist z.B. ein beheizter Metalldraht. Der Beutel 26 wird somit direkt neben der Siegelnaht abgetrennt. Der abgetrennte perforierte Beutelhals 27 kann abgeführt werden. Die Klemmschiene 10 und der Begrenzungsbalken 9 verbleiben in ihrer abgesenkten Position.

Wie in Fig. 2e gezeigt ist, werden die Klemmschienenaufnahme 7, die Aufnahme 8, der Begrenzungsbalken 9, die Klemmschiene 10, der Trenndraht 11 und der Siegeldraht 12 wieder in ihre Ruheposition bewegt. Die gestrichelte Linie in Fig. 2e zeigt die Ebene an, in der der Beutelhals 27 vom Beutel 26 getrennt wurde. In diesem Schritt wird die Kammer 4 belüftet und der Deckel 5 geöffnet. Der befüllte und versiegelte Beutel 26 kann entnommen oder über das Förderband 1 (siehe Fig. 1) herausgeführt werden und das Verfahren kann wie unter Fig. 2a beschrieben von Neuem beginnen.

Fig. 4 zeigt eine zweite Ausführungsform der vorliegenden Erfindung. An der Aufnahme 8 ist zusätzlich zu dem Trenndraht 11 und dem Siegeldraht 12 ein zweiter Siegeldraht 14 vorgesehen. Der Trenndraht 11, der Siegeldraht 12 und der zweite Siegeldraht 14 wirken mit dem Widerlager 13 (siehe Fig. 2a bis e) zusammen. Auf diese Weise wird ermöglicht, dass der Beutel 26.mit zwei Siegelnähten versehen werden kann. Die Belastbarkeit, sowie die Sicherheit der Siegelung wird somit erhöht.

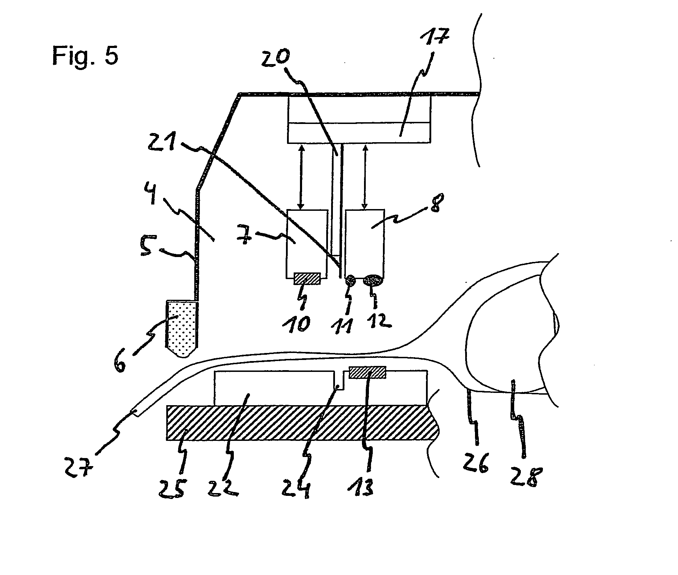

Fig. 5 zeigt in einer weiteren Ausführungsform der vorliegenden Erfindung eine schematische Schnittansicht eines Teils der Kammerbandmaschine. Der Aufbau der Vorrichtung gleicht dem in Fig. 2a gezeigten Aufbau. Der einzige Unterschied besteht darin, dass in dieser weiteren Ausführungsform kein Begrenzungsbalken 9 (siehe Fig. 2a bis e) vorgesehen ist.

Der Betrieb der Vorrichtung gleicht dem unter Fig. 2a beschriebenen Betrieb. Durch den fehlenden Begrenzungsbalken 9 (siehe Fig. 2a bis e) entsteht kein Spalt 15 (siehe Fig. 2b bis d). Durch das durch die vorliegende Erfindung erreichte konstante und langsame Entweichen der Luft aus dem Beutel 26 bei der Evakuierung der Kammer 4 kommt es auch in dieser Ausführungsform zu keiner Verunreinigung des Siegelbereichs durch das Schüttgut.

Die Form des Deckels ist nicht auf die gezeigte Form beschränkt. Der Deckel kann beispielsweise auch die Form einer hohlen Halbkugel oder eine andere beliebige Form aufweisen. Ebenso ist die Anordnung der Klemmschiene, der Siegeldrähte bzw. des Begrenzungsbalkens nicht auf die gezeigte Form beschränkt.

Weiterhin ist es möglich, in den verwendeten Beuteln ein Membranventil vorzusehen, das in einem Folienbereich zwischen der Klemmschiene und dem Siegeldraht eingesetzt ist. Durch diese Membran kann die Luft aus dem Beutel gedrosselt entweichen. Denkbar ist auch ein Tyvek-Fenster durch das die Luft ebenfalls gedrosselt entweichen kann. Die Perforation kann auch eine Mikroperforation sein, wie es z.B. bei Goretexmaterial, das z.B. in einem Membranventil vorgesehen ist, oder bei Tyvek der Fall ist.

Es ist auch denkbar, mehrere Beutel gleichzeitig in der Kammer abzufertigen. Weiterhin ist es auch denkbar, die Perforiervorrichtung andersartig so auszuführen, dass sie mindestens eine Folienlage durchdringen kann. Die Öffnungen im Beutel können auf beliebige Weise erzeugt werden.

Es ist weiterhin denkbar, die Kammer bereits während der Siegelung des Beutels zu belüften. Zu diesem Zweck könnte der Begrenzungsbalken die Beutelfolie zusammen mit der Klemmschiene fixieren, um eine Beschädigung der noch heißen und deformierbaren Siegelnaht durch eine Krafteinwirkung auf die Folie, die durch die einströmende Luft in die Kammer verursacht wird, zu verhindern.

Die Erfindung ist auch nicht auf die Verpackung von pulver-und granulatförmigen Produkten beschränkt. Vielmehr ist die Verpackung von jeder Form von Schüttgütern möglich.

Die Erfindung ist ferner auch nicht auf die Anwendung in einer Kammerbandmaschine beschränkt. Sie ist auch auf eine Kammermaschine ohne Förderband anwendbar.

## Patentansprüche

1. Verfahren zum Verpacken eines Schüttguts in Beutel (26), bei dem
ein mit einem Schüttgut befüllter Beutel (26) bereitgestellt wird,
durch Schließen eines Deckels (5) eine Kammer (4) um den Beutel (26) gebildet wird und
die Kammer (4) evakuiert wird, wobei ein Beutel (26) in der Kammer perforiert wird.

2. Verfahren gemäß Anspruch 1, **dadurch gekennzeichnet, dass** das Verfahren weiterhin den Schritt aufweist:
Perforieren des Beutels (26) mit Hilfe einer Perforiervorrichtung (21) vor, bei oder nach dem Evakuieren.

3. Verfahren gemäß Anspruch 1 oder 2, **dadurch gekennzeichnet, dass** im Beutel (26) durch die Perforierung Öffnungen mit einem Abstand von etwa 1 mm bis etwa 100mm zueinander und einer Fläche von jeweils etwa 0,002mm² bis etwa 0,2mm² erzeugt werden.

4. Verfahren gemäß einem der Ansprüche 1 bis 3, **dadurch gekennzeichnet, dass** im Beutel (26) durch die Perforierung Öffnungen mit einem Abstand von etwa 1 mm bis etwa 50mm zueinander und einer Fläche von jeweils etwa 0,002mm² bis etwa 0,1mm² erzeugt werden.

5. Verfahren gemäß einem der Ansprüche 1 bis 4, **dadurch gekennzeichnet, dass** im Beutel (26) durch die Perforierung Öffnungen mit einem Abstand von etwa 1 mm bis etwa 20mm zueinander und einer Fläche von jeweils etwa 0,005mm² bis etwa 0,1mm² erzeugt werden.

6. Verfahren gemäß einem der Ansprüche 1 bis 5, **dadurch gekennzeichnet, dass** mit Hilfe von einer Vielzahl von Nadeln (212) eine Vielzahl von Öffnungen im Beutel (26) erzeugt werden.

7. Verfahren gemäß einem der Ansprüche 1 bis 6, **dadurch gekennzeichnet, dass** die Öffnungen im Beutel (26) eine Linie bilden, die im Wesentlichen parallel zur Siegelnaht ist.

8. Verfahren gemäß einem der Ansprüche 1 bis 7, **dadurch gekennzeichnet, dass** ein Begrenzungsbalken (9) das Produkt (28) beim Evakuieren im Beutel (26) begrenzen kann.

9. Verfahren gemäß Anspruch 8, **dadurch gekennzeichnet, dass** der Begrenzungsbalken (9) einen Spalt (15) erzeugen kann, der derart ausgebildet ist, dass Luft aus dem Beutel (26) entweichen kann und dass kein Schüttgut durch einen Luftstrom mitgenommen wird.

10. Verfahren gemäß einem der Ansprüche 1 bis 9, **dadurch gekennzeichnet, dass** der Beutel (26) gleichzeitig versiegelt und geschnitten wird.

11. Verfahren gemäß einem der Ansprüche 1 bis 10, **dadurch gekennzeichnet, dass** mit Hilfe eines ersten Siegeldrahts (12) und eines zweiten Siegeldrahts (14) zwei Siegelnähte erzeugt werden.

12. Verfahren gemäß einem der Ansprüche 1 bis 11, **dadurch gekennzeichnet, dass** das Verfahren weiterhin den Schritt aufweist:
gleichzeitiges Siegeln des Beutels (26) durch mindestens einen Siegeldraht (12, 14) und Belüften der Kammer (4).

13. Verfahren gemäß einem der Ansprüche 1 bis 12, **dadurch gekennzeichnet, dass** eine Klemmschiene (10) abgesenkt wird, bevor sich die Kammer (4) schließt.

14. Vorrichtung zum Verpacken eines Schüttguts in Beutel (26) mit einem Deckel (5), der zusammen mit einem Unterteil (25) eine evakuierbare Kammer (4) bildet, **dadurch gekennzeichnet, dass** in der Kammer (4) eine Perforiervorrichtung (21) zum Perforieren des mit dem Schüttgut befüllten Beutels (26) vorgesehen ist.

15. Vorrichtung gemäß Anspruch 14, **dadurch gekennzeichnet, dass** im Beutel (26) durch die Perforierung Öffnungen mit einem Abstand von etwa 1 mm bis etwa 100mm zueinander und einer Fläche von jeweils etwa 0,002mm² bis etwa 0,2mm² erzeugbar sind.

16. Vorrichtung gemäß Anspruch 14 oder 15, **dadurch gekennzeichnet, dass** im Beutel (26) durch die Perforierung Öffnungen mit einem Abstand von etwa 1 mm bis etwa 50mm zueinander und einer Fläche von jeweils etwa 0,002mm² bis etwa 0,1mm² erzeugbar sind.

17. Vorrichtung gemäß einem der Ansprüche 14 bis 16, **dadurch gekennzeichnet, dass** im Beutel (26) durch die Perforierung Öffnungen mit einem Abstand von etwa 1mm bis etwa 20mm zueinander und einer Fläche von jeweils etwa 0,005mm² bis etwa 0,1mm² erzeugbar sind.

18. Vorrichtung gemäß einem der Ansprüche 14 bis 17, **dadurch gekennzeichnet, dass** die Perforiervorrichtung (21) eine Vielzahl von Nadeln (212) zum Perforieren des Beutels (26) aufweist.

19. Vorrichtung gemäß einem der Ansprüche 14 bis 18, **dadurch gekennzeichnet, dass** ein Begrenzungsbalken (9) zum Begrenzen des Produkts (28) im Beutel (26) vorgesehen ist.

20. Vorrichtung gemäß einem der Ansprüche 14 bis 19, **dadurch gekennzeichnet, dass** ein Siegeldraht (12) und ein Trenndraht (11) vorgesehen sind.

21. Vorrichtung gemäß einem der Ansprüche 14 bis 20, **dadurch gekennzeichnet, dass** ein erster Siegeldraht (12) und ein zweiter Siegeldraht (14) vorgesehen sind.

## Claims

1. A method of packaging bulk material into bags (26), in which a bag (26) filled with bulk material is prepared,
a chamber (4) is formed around the bag (26) by closing a cover (5), and
the chamber (4) is evacuated, wherein a bag (26) is perforated in the chamber.

2. A method according to Claim 1, **characterised in that** the method also has the step of:
perforating the bag (26) by means of a perforation device (21) before, during or after evacuation.

3. A method according to Claim 1 or 2, **characterised in that** openings are created in the bag (26) by the perforation, with a mutual distance of approximately 1 mm to approximately 100 mm and each with an area of approximately 0.002 mm² to approximately 0.2 mm².

4. A method according to any one of Claims 1 to 3, **characterised in that** openings are created in the bag (26) by the perforation, with a mutual distance of approximately 1 mm to approximately 50 mm and each with an area of approximately 0.002 mm² to approximately 0.1 mm².

5. A method according to any one of Claims 1 to 4, **characterised in that** openings are created in the bag (26) by the perforation, with a mutual distance of approximately 1 mm to approximately 20 mm and each with an area of approximately 0.005 mm² to approximately 0.1 mm².

6. A method according to any one of Claims 1 to 5, **characterised in that** a plurality of openings are created in the bag (26) by means of a plurality of needles (212).

7. A method according to any one of Claims 1 to 6, **characterised in that** the openings in the bag (26) form a line which is essentially parallel to the sealing seam.

8. A method according to any one of Claims 1 to 7, **characterised in that** a limiting beam (9) can limit the product (28) during evacuation of the bag (26).

9. A method according to Claim 8, **characterised in that** the limiting beam (9) can create a gap (15) which is so formed that air can escape from the bag (26) and that no bulk material is entrained by an airflow.

10. A method according to any one of Claims 1 to 9, **characterised in that** the bag (26) is simultaneously sealed and cut.

11. A method according to any one of Claims 1 to 10, **characterised in that** two sealing seams are created by means of a first sealing wire (12) and a second sealing wire (14).

12. A method according to any one of Claims 1 to 11, **characterised in that** the method also has the step of :
simultaneously sealing the bag (26) by means of at least one sealing wire (12,14) and venting the chamber (4).

13. A method according to any one of Claims 1 to 12, **characterised in that** a clamping bar (10) is lowered before the chamber (4) is closed.

14. A device for packaging bulk material in bags 26), having a cover (5) which together with a lower part (25) forms a chamber (4) which can be evacuated, **characterised in that** a perforation device (21) is provided in the chamber (4) for perforating the bag (26) filled with the bulk material.

15. A device according to Claim 14, **characterised in** openings can be created in the bag (26) by the perforation, with a mutual distance of approximately 1 mm to approximately 100 mm and each with an area of approximately 0.002 mm² to approximately 0.2 mm².

16. A device according to Claim 14 or 15, **characterised in that** openings can be created in the bag (26) by the perforation, with a mutual distance of approximately 1 mm to approximately 50 mm and each with an area of approximately 0.002 mm² to approximately 0.1 mm².

17. A device according to any one of Claims 14 to 16, **characterised in that** openings can be created in the bag (26) by the perforation, with a mutual distance of approximately 1 mm to approximately 20 mm and each with an area of approximately 0.005 mm² to approximately 0.1 mm².

18. A device according to any one of Claims 14 to 17, **characterised in that** the perforation device (21) has a plurality of needles (212) for perforating the bag (26).

19. A device according to any one of Claims 14 to 18, **characterised in that** a limiting beam (9) is provided for limiting the product (28) in the bag (26).

20. A device according to any one of Claims 14 to 19, **characterised in that** a sealing wire (12) and a separating wire (11) are provided.

21. A device according to any one of Claims 14 to 20, **characterised in that** a first sealing wire (12) and a second sealing wire (14) are provided.

## Revendications

1. Procédé pour emballer un produit en vrac dans des sachets (26), selon lequel
un sachet (26) rempli d'un produit en vrac est préparé,
une chambre (4) est formée autour du sachet (26) grâce à la fermeture d'un couvercle (5), et
le vide est produit dans la chambre (4), étant précisé qu'un sachet (26) qui se trouve dans la chambre est perforé.

2. Procédé selon la revendication 1, **caractérisé en ce qu'**il comporte également l'étape qui consiste :
à perforer le sachet (26) à l'aide d'un dispositif perforateur (21) avant, pendant ou après la production du vide.

3. Procédé selon la revendication 1 ou 2, **caractérisé en ce que** dans le sachet (26), des ouvertures espacées d'environ 1 mm à environ 100 mm et d'une surface d'environ 0,002 mm² à environ 0,2 mm² chacune sont produites grâce à la perforation.

4. Procédé selon l'une des revendications 1 à 3, **caractérisé en ce que** dans le sachet (26), des ouvertures espacées d'environ 1 mm à environ 50 mm et d'une surface d'environ 0,002 mm² à environ 0,1 mm² chacune sont produites grâce à la perforation.

5. Procédé selon l'une des revendications 1 à 4, **caractérisé en ce que** dans le sachet (26), des ouvertures espacées d'environ 1 mm à environ 20 mm et d'une surface d'environ 0,005 mm² à environ 0,1 mm² chacune sont produites grâce à la perforation.

6. Procédé selon l'une des revendications 1 à 5, **caractérisé en ce qu'**à l'aide d'une multiplicité d'aiguilles (212), une multiplicité d'ouvertures sont réalisées dans le sachet (26).

7. Procédé selon l'une des revendications 1 à 6, **caractérisé en ce que** les ouvertures prévues dans le sachet (26) forment une ligne qui est globalement parallèle au joint scellé.

8. Procédé selon l'une des revendications 1 à 7, **caractérisé en ce qu'**une barre de limitation (9) peut limiter le produit (28) dans le sachet (26) lors de la production du vide.

9. Procédé selon la revendication 8, **caractérisé en ce que** la barre de limitation (9) peut produire un interstice (15) qui est conçu de telle sorte que de l'air puisse s'échapper du sachet (26) et que le produit en vrac ne soit pas entraîné par un écoulement d'air.

10. Procédé selon l'une des revendications 1 à 9, **caractérisé en ce que** le sachet (26) est en même temps scellé et coupé.

11. Procédé selon l'une des revendications 1 à 10, **caractérisé en ce qu'**à l'aide d'un premier fil de scellage (12) et d'un second fil de scellage (14), deux joints scellés sont réalisés.

12. Procédé selon l'une des revendications 1 à 11, **caractérisé en ce qu'**il comporte également l'étape qui consiste :
en même temps à sceller le sachet (26) à l'aide d'au moins un fil de scellage (12, 14) et à aérer la chambre (4).

13. Procédé selon l'une des revendications 1 à 12, **caractérisé en ce qu'**une barre de serrage (10) est abaissée avant que la chambre (4) ne se ferme.

14. Dispositif pour emballer un produit en vrac dans des sachets (26), avec un couvercle (5) qui forme avec une partie inférieure (25) une chambre (4) apte à être mise sous vide, **caractérisé en ce qu'**il est prévu dans la chambre (4) un dispositif perforateur (21) pour perforer le sachet (26) rempli du produit en vrac.

15. Dispositif selon la revendication 14, **caractérisé en ce que** dans le sachet (26), des ouvertures espacées d'environ 1 mm à environ 100 mm et d'une surface d'environ 0,002 mm² à environ 0,2 mm² chacune peuvent être produites grâce à la perforation.

16. Dispositif selon la revendication 14 ou 15, **caractérisé en ce que** dans le sachet (26), des ouvertures espacées d'environ 1 mm à environ 50 mm et d'une surface d'environ 0,002 mm² à environ 0,1 mm² chacune peuvent être produites grâce à la perforation.

17. Dispositif selon l'une des revendications 14 à 16, **caractérisé en ce que** dans le sachet (26), des ouvertures espacées d'environ 1 mm à environ 20 mm et d'une surface d'environ 0,005 mm² à environ 0,1 mm² chacune peuvent être produites grâce à la perforation.

18. Dispositif selon l'une des revendications 14 à 17, **caractérisé en ce que** le dispositif perforateur (21) présente une multiplicité d'aiguilles (212) pour perforer le sachet (26).

19. Dispositif selon l'une des revendications 14 à 18, **caractérisé en ce qu'**il est prévu une barre de limitation (9) pour limiter le produit (28) dans le sachet (26).

20. Dispositif selon l'une des revendications 14 à 19, **caractérisé en ce qu'**il est prévu un fil de scellage (12) et un fil de séparation (11).

21. Dispositif selon l'une des revendications 14 à 20, **caractérisé en ce qu'**il est prévu un premier fil de scellage (12) et un second fil de scellage (14).
